# EUROPEAN PATENT APPLICATION

(11) **EP 4 365 233 A1**
(43) Date of publication of application: **08.05.2024**
(21) Application number: 22833313.4
(22) Date of filing: 30.06.2022
(51) Int. Cl.: C08L 27/06, B29C 41/18, B29C 41/36, B32B 5/18, B32B 27/30, B32B 27/40, C08K 5/12, C08L 33/08, C08L 67/00

(54) **VINYL CHLORIDE RESIN COMPOSITION FOR POWDER MOLDING, VINYL CHLORIDE RESIN MOLDED BODY, AND MULTILAYER BODY**

(30) Priority: 30.06.2021 JP 2021109630
(71) Applicant: Zeon Corporation, Tokyo 100-8246 (JP)
(72) Inventor: FUJIWARA Takanori, Tokyo 100-8246 (JP)
(74) Representative: Maiwald GmbH
(86) International application number: PCT/JP2022/026400
(87) International publication number: WO 2023/277167

(57) **Abstract**

Provided is a vinyl chloride resin composition for powder molding that is capable of forming a vinyl chloride resin molded product have few micro-pinholes. The vinyl chloride resin composition for powder molding contains a vinyl chloride resin, a plasticizer including either or both of a trimellitic acid ester and a polyester, and an acrylic polymer having a weight-average molecular weight of not less than 1,000 and not more than 50,000. The vinyl chloride resin composition for powder molding is preferably used in powder slush molding.

## Description

### TECHNICAL FIELD

The present disclosure relates to a vinyl chloride resin composition for powder molding, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing powder molding by a known molding method such as powder slush molding with respect to a vinyl chloride resin composition that contains a vinyl chloride resin, a plasticizer, and additives such as a mold release agent (for example, refer to Patent Literature (PTL) 1).

As one specific example, PTL 1 discloses the production of a surface skin formed of a vinyl chloride resin molded product through powder slush molding of a vinyl chloride resin composition that contains a vinyl chloride resin, plasticizers such as a trimellitic acid ester and a polyester, and additives such as 12-hydroxystearic acid serving as a mold release agent.

### CITATION LIST

### Patent Literature

PTL 1: WO2020/090556A1

### SUMMARY

### (Technical Problem)

In a situation in which a vinyl chloride resin composition is powder molded, minute holes (hereinafter, referred to as "micro-pinholes") may arise at the surface of the vinyl chloride resin molded product that is formed. When a vinyl chloride resin molded product has fewer micro-pinholes at the surface thereof, the vinyl chloride resin molded product has better external appearance, and thus can more suitably be used as a surface skin of an automobile interior component or the like.

However, there is room for improvement of the conventional vinyl chloride resin composition described above in terms of reducing micro-pinholes at the surface of a formed vinyl chloride resin molded product.

Accordingly, one object of the present disclosure is to provide a vinyl chloride resin composition for powder molding that is capable of forming a vinyl chloride resin molded product having few micro-pinholes.

Another object of the present disclosure is to provide a vinyl chloride resin molded product having few micro-pinholes.

Yet another object of the present disclosure is to provide a laminate including this vinyl chloride resin molded product.

### (Solution to Problem)

The inventor conducted diligent investigation with the aim of solving the problem set forth above. The inventor discovered that by powder molding a vinyl chloride resin composition that contains a vinyl chloride resin, a specific plasticizer, and an acrylic polymer having a weight-average molecular weight within a specific range, a vinyl chloride resin molded product having few micro-pinholes is obtained, and, in this manner, completed the present disclosure.

Specifically, the present disclosure aims to advantageously solve the problem set forth above, and [1] a presently disclosed vinyl chloride resin composition for powder molding comprises: a vinyl chloride resin; a plasticizer including either or both of a trimellitic acid ester and a polyester; and an acrylic polymer having a weight-average molecular weight of not less than 1,000 and not more than 50,000.

By powder molding a vinyl chloride resin composition that contains a vinyl chloride resin, a specific plasticizer, and an acrylic polymer having a weight-average molecular weight within a specific range in this manner, it is possible to form a vinyl chloride resin molded product having few micro-pinholes.

Note that the "weight-average molecular weight" of the acrylic polymer referred to in the present disclosure is an equivalent value based on standard polystyrene that is measured by gel permeation chromatography.

[2] In the vinyl chloride resin composition for powder molding according to the foregoing [1], content of the acrylic polymer is preferably not less than 0.05 parts by mass and not more than 10 parts by mass relative to 100 parts by mass of the vinyl chloride resin.

When the content of the acrylic polymer in the vinyl chloride resin composition for powder molding is within the specific range set forth above, micro-pinholes at the surface of a formed vinyl chloride resin molded product can be further reduced.

[3] In the vinyl chloride resin composition for powder molding according to the foregoing [1] or [2], total content of the trimellitic acid ester and the polyester is preferably not less than 30 parts by mass and not more than 200 parts by mass relative to 100 parts by mass of the vinyl chloride resin.

When the total content of the trimellitic acid ester and the polyester in the vinyl chloride resin composition for powder molding is within the specific range set forth above, tensile characteristics (particularly tensile elongation) of a formed vinyl chloride resin molded product can be further enhanced.

[4] In the vinyl chloride resin composition for powder molding according to any one of the foregoing [1] to [3], the acrylic polymer preferably includes a structural unit derived from 2-ethylhexyl acrylate.

When an acrylic polymer that includes a structural unit derived from 2-ethylhexyl acrylate is used, micro-pinholes at the surface of a formed vinyl chloride resin molded product can be further reduced.

[5] The vinyl chloride resin composition for powder molding according to any one of the foregoing [1] to [4] is preferably used in powder slush molding.

By using the vinyl chloride resin composition for powder molding in powder slush molding, it is easier to obtain a vinyl chloride resin molded product that can be used well as an automobile interior material such as a surface skin for an automobile instrument panel, for example.

Moreover, the present disclosure aims to advantageously solve the problem set forth above, and [6] a presently disclosed vinyl chloride resin molded product is obtained through powder molding of the vinyl chloride resin composition for powder molding according to any one of the foregoing [1] to [5].

A vinyl chloride resin molded product obtained through powder molding of the vinyl chloride resin composition for powder molding set forth above has few micro-pinholes and excellent external appearance.

[7] The vinyl chloride resin molded product according to the foregoing [6] is preferably for a surface skin of an automobile interior component.

By using the vinyl chloride resin molded product as a surface skin of an automobile interior component, it is possible to produce an automobile interior component, such as an automobile instrument panel, having few micro-pinholes and excellent external appearance.

Furthermore, the present disclosure aims to advantageously solve the problem set forth above, and [8] a presently disclosed laminate comprises: a foamed polyurethane molded product; and the vinyl chloride resin molded product according to the foregoing [6] or [7].

A laminate that includes a foamed polyurethane molded product and the vinyl chloride resin molded product set forth above can suitably be used as an automobile interior material that is used to produce an automobile interior component, such as an automobile instrument panel, having excellent external appearance.

### (Advantageous Effect)

According to the present disclosure, it is possible to provide a vinyl chloride resin composition for powder molding that is capable of forming a vinyl chloride resin molded product have few micro-pinholes.

Moreover, according to the present disclosure, it is possible to provide a vinyl chloride resin molded product having few micro-pinholes.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition for powder molding can be used, for example, in powder molding of the presently disclosed vinyl chloride resin molded product. Moreover, a vinyl chloride resin molded product obtained through powder molding using the presently disclosed vinyl chloride resin composition for powder molding can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition for powder molding)

The presently disclosed vinyl chloride resin composition for powder molding contains: (a) a vinyl chloride resin; (b) a plasticizer including either or both of a trimellitic acid ester and a polyester; and (c) an acrylic polymer having a weight-average molecular weight that is within a specific range, and optionally further contains additives. As a result of the presently disclosed vinyl chloride resin composition for powder molding containing at least the (a) vinyl chloride resin, (b) plasticizer, and (c) acrylic polymer, it is possible to reduce pinholes at the surface of a formed vinyl chloride resin molded product. Consequently, by using the presently disclosed vinyl chloride resin composition for powder molding, it is possible to obtain a vinyl chloride resin molded product that is suitable as an automobile interior material, such as a surface skin for an automobile instrument panel or a surface skin for a door trim, having few pinholes and excellent external appearance, for example.

Note that from a viewpoint of easily obtaining a vinyl chloride resin molded product that can be used well as an automobile interior material using the presently disclosed vinyl chloride resin composition for powder molding, for example, the presently disclosed vinyl chloride resin composition for powder molding is preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

Conventionally known production methods such as suspension polymerization, emulsion polymerization, solution polymerization, and bulk polymerization can be used to produce the (a) vinyl chloride resin.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include those described in WO2016/098344A1, for example. One of these components may be used individually, or two or more of these components may be used in combination in a freely selected ratio.

### «Vinyl chloride resin particles»

In the vinyl chloride resin composition for powder molding, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. This is because sufficient physical strength of a vinyl chloride resin molded product formed using the vinyl chloride resin composition for powder molding can be ensured while also improving tensile characteristics (particularly tensile elongation), for example, when the average degree of polymerization of the vinyl chloride resin forming the vinyl chloride resin particles is not less than any of the lower limits set forth above. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, meltability of the vinyl chloride resin composition for powder molding can be improved when the average degree of polymerization of the vinyl chloride resin forming the vinyl chloride resin particles is not more than any of the upper limits set forth above.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. This is because powder fluidity of the vinyl chloride resin composition for powder molding further improves when the average particle diameter of the vinyl chloride resin particles is not less than any of the lower limits set forth above. Moreover, meltability of the vinyl chloride resin composition for powder molding further improves and surface smoothness of a vinyl chloride resin molded product formed using the composition can be improved when the average particle diameter of the vinyl chloride resin particles is not more than any of the upper limits set forth above.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be 100 mass%, and is preferably 95 mass% or less, and more preferably 90 mass% or less. This is because sufficient physical strength of a vinyl chloride resin molded product formed using the vinyl chloride resin composition for powder molding can be ensured while also improving tensile elongation when the proportional content of the vinyl chloride resin particles in the (a) vinyl chloride resin is not less than any of the lower limits set forth above. Moreover, powder fluidity of the vinyl chloride resin composition for powder molding improves when the proportional content of the vinyl chloride resin particles in the (a) vinyl chloride resin is not more than any of the upper limits set forth above.

### «Vinyl chloride resin fine particles»

In the vinyl chloride resin composition for powder molding, the vinyl chloride resin fine particles normally function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,000 or less, and more preferably 1,800 or less. This is because powder fluidity of the vinyl chloride resin composition for powder molding improves, and tensile elongation of a molded product obtained using the composition improves when the average degree of polymerization of the vinyl chloride resin forming the vinyl chloride resin fine particles serving as a dusting agent is not less than any of the lower limits set forth above. Moreover, meltability of the vinyl chloride resin composition for powder molding improves, and surface smoothness of a vinyl chloride resin molded product formed using the composition improves when the average degree of polymerization of the vinyl chloride resin forming the vinyl chloride resin fine particles is not more than any of the upper limits set forth above.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. This is because the vinyl chloride resin fine particles are not too small to function as a dusting agent, for example, and powder fluidity of the vinyl chloride resin composition for powder molding can be further improved when the average particle diameter of the vinyl chloride resin fine particles is not less than any of the lower limits set forth above. Moreover, meltability of the vinyl chloride resin composition for powder molding further increases, and surface smoothness of a formed vinyl chloride resin molded product can be further improved when the average particle diameter of the vinyl chloride resin fine particles is not more than any of the upper limits set forth above.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. This is because powder fluidity of the vinyl chloride resin composition for powder molding further improves when the proportional content of the vinyl chloride resin fine particles in the (a) vinyl chloride resin is not less than any of the lower limits set forth above. Moreover, physical strength of a vinyl chloride resin molded product formed using the vinyl chloride resin composition for powder molding can be further increased when the proportional content of the vinyl chloride resin fine particles in the (a) vinyl chloride resin is not more than any of the upper limits set forth above.

### <(b) Plasticizer>

The (b) plasticizer includes either or both of (b1) a trimellitic acid ester and (b2) a polyester. Through inclusion of either or both of the (b1) trimellitic acid ester and the (b2) polyester as the (b) plasticizer used in the presently disclosed vinyl chloride resin composition for powder molding, it is possible to form a vinyl chloride resin molded product having sufficiently excellent tensile characteristics (particularly tensile elongation).

Note that the (b) plasticizer may include other plasticizers besides the (b1) trimellitic acid ester and the (b2) polyester.

### <<(b1) Trimellitic acid ester>>

The (b1) trimellitic acid ester included in the (b) plasticizer is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable as the monohydric alcohol, and a linear aliphatic alcohol having a carbon number of 6 to 18 is more preferable as the monohydric alcohol.

In particular, the (b1) trimellitic acid ester is preferably a triester compound in which substantially all the carboxy groups of trimellitic acid are esterified with the monohydric alcohol. Alcohol residue portions of the triester compound may all be derived from the same alcohol or may each be derived from a different alcohol.

The (b1) trimellitic acid ester may be one compound or a mixture of different compounds.

Specific examples of the (b1) trimellitic acid ester that are suitable include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trialkyl trimellitates (esters including two or more types of alkyl groups having different carbon numbers [with a proviso that the carbon number is 6 to 18] in a molecule), tri-n-alkyl trimellitates (esters including two or more types of alkyl groups having different carbon numbers [with a proviso that the carbon number is 6 to 18] in a molecule), and mixtures thereof.

Specific examples of the (b1) trimellitic acid ester that are more preferable include tri-n-octyl trimellitate, tri(2-ethylhexyl) trimellitate, tri-n-nonyl trimellitate, tri-n-decyl trimellitate, tri-n-alkyl trimellitates (esters including two or more types of alkyl groups having different carbon numbers [with a proviso that the carbon number is 6 to 18] in a molecule), and mixtures thereof.

The proportional content of the (b1) trimellitic acid ester in the (b) plasticizer can be 0 mass% or more, is preferably 10 mass% or more, more preferably 20 mass% or more, and even more preferably 25 mass% or more, can be 100 mass% or less, and is preferably 65 mass% or less, more preferably 55 mass% or less, and even more preferably 45 mass% or less. When the proportional content of the (b1) trimellitic acid ester in the (b) plasticizer is within any of the specific ranges set forth above, tensile characteristics (particularly tensile elongation) of a formed vinyl chloride resin molded product can be further enhanced.

Moreover, the content of the (b1) trimellitic acid ester in the vinyl chloride resin composition for powder molding can be 0 parts by mass or more, and is preferably 10 parts by mass or more, more preferably 20 parts by mass or more, and even more preferably 25 parts by mass or more relative to 100 parts by mass of the (a) vinyl chloride resin, and is preferably 100 parts by mass or less, more preferably 65 parts by mass or less, even more preferably 55 parts by mass or less, and further preferably 45 parts by mass or less relative to 100 parts by mass of the (a) vinyl chloride resin. When the content of the (b) trimellitic acid ester in the vinyl chloride resin composition for powder molding is within any of the specific ranges set forth above, tensile characteristics (particularly tensile elongation) of a formed vinyl chloride resin molded product can be further enhanced. Moreover, when the content of the (b) trimellitic acid ester in the vinyl chloride resin composition for powder molding is not more than any of the upper limits set forth above, micro-pinholes at the surface of a formed vinyl chloride resin molded product can be sufficiently reduced.

### «(b2) Polyester»

The (b2) polyester included in the (b) plasticizer is not specifically limited and can, for example, be a polyester such as a polyester including a structural unit derived from adipic acid (adipic acid-based polyester), a polyester including a structural unit derived from sebacic acid (sebacic acid-based polyester), or a polyester including a structural unit derived from phthalic acid (phthalic acid-based polyester). One of these polyesters may be used individually, or two or more of these polyesters may be used as a mixture in a freely selected ratio.

Moreover, the (b2) polyester included in the (b) plasticizer may, without any specific limitations, be a polyester including a structural unit derived from a diol compound such as 3-methyl-1,5-pentanediol or 1,3-butanediol, for example.

From a viewpoint of further enhancing tensile characteristics (particularly tensile elongation) of a formed vinyl chloride resin molded product, it is preferable to use a polyester including an adipic acid-derived structural unit as the (b2) polyester, more preferable to use a polyester including an adipic acid-derived structural unit and a diol compound-derived structural unit as the (b2) polyester, and particularly preferable to use a polyester including an adipic acid-derived structural unit and a 3-methyl-1,5-pentanediol-derived structural unit as the (b2) polyester.

In order to facilitate description, a polyester including an adipic acid-derived structural unit and a 3-methyl-1,5-pentanediol-derived structural unit is referred to below as a "polyester A".

Although the polyester A including the specific structural units described above may include structural units other than an adipic acid-derived structural unit and a 3-methyl-1,5-pentanediol-derived structural unit, the total of adipic acid-derived structural units and 3-methyl-1,5-pentanediol-derived structural units is preferably 50 mass% or more of all structural units, and more preferably 80 mass% or more of all structural units. Moreover, the polyester A including the specific structural units described above preferably only includes an adipic acid-derived structural unit and a 3-methyl-1,5-pentanediol-derived structural unit as repeating units.

The polyester A including the specific structural units described above can be obtained through condensation polymerization of adipic acid and 3-methyl-1,5-pentanediol without any specific limitations. This condensation polymerization can be performed in the presence of a catalyst. Moreover, the condensation polymerization can be performed using an alcohol and/or a monobasic acid as a terminal stopping component. The condensation polymerization of adipic acid and 3-methyl-1,5-pentanediol and the termination reaction of the obtained polycondensate and the terminal stopping component may be performed in one go or may be performed separately. A product that is obtained through the condensation polymerization and the termination reaction may be subjected to after-treatment such as distillation. Commonly known conditions can be adopted as reaction conditions of the condensation polymerization, such as the used amounts of the monomers, the catalyst, and the terminal stopping component described above.

Also note that a commercially available product may be used as the polyester A including the specific structural units described above.

The catalyst used in the condensation polymerization reaction is not specifically limited and may be dibutyltin oxide, tetraalkyl titanate, or the like, for example.

Examples of alcohols that can be used as the terminal stopping component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, undecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohol, and mixtures thereof.

Examples of monobasic acids that can be used as the terminal stopping component include acetic acid, propionic acid, butyric acid, isobutyric acid, valeric acid, pivalic acid, caproic acid, heptanoic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Of these examples, 2-ethylhexanol is preferable as the terminal stopping component.

The number-average molecular weight of the polyester A including the specific structural units described above is preferably 1,000 or more, and more preferably 2,000 or more, and is preferably 10,000 or less, and more preferably 7,000 or less.

Note that the "number-average molecular weight" can be measured by VPO (vapor pressure osmometry).

Moreover, the polyester A including the specific structural units described above preferably has an acid value of 1 mg KOH/g or less.

Furthermore, the polyester A including the specific structural units described above preferably has a hydroxyl value of 30 mg KOH/g or less.

The viscosity of the polyester A including the specific structural units described above is preferably 500 mPa·s or more, and more preferably 1,000 mPa·s or more, and is preferably 8,000 mPa·s or less, and more preferably 5,000 mPa·s or less.

Note that the "viscosity" can be measured in accordance with JIS Z8803 at a temperature of 23°C.

The proportional content of the (b2) polyester in the (b) plasticizer can be 0 mass% or more, is preferably 35 mass% or more, more preferably 45 mass% or more, and even more preferably 55 mass% or more, can be 100 mass% or less, and is preferably 90 mass% or less, more preferably 80 mass% or less, and even more preferably 75 mass% or less. When the proportional content of the (b2) polyester in the (b) plasticizer is within any of the specific ranges set forth above, tensile characteristics (particularly tensile elongation) of a formed vinyl chloride resin molded product can be further enhanced.

The content of the (b2) polyester in the vinyl chloride resin composition for powder molding can be 0 parts by mass or more, and is preferably 20 parts by mass or more, more preferably 35 parts by mass or more, even more preferably 45 parts by mass or more, and further preferably 55 parts by mass or more relative to 100 parts by mass of the (a) vinyl chloride resin, and is preferably 100 parts by mass or less, more preferably 90 parts by mass or less, even more preferably 85 parts by mass or less, and further preferably 80 parts by mass or less relative to 100 parts by mass of the (a) vinyl chloride resin. When the content of the (b2) polyester in the vinyl chloride resin composition for powder molding is within any of the specific ranges set forth above, tensile characteristics (particularly tensile elongation) of a vinyl chloride resin molded product can be further enhanced. Moreover, when the content of the (b2) polyester in the vinyl chloride resin composition for powder molding is not more than any of the upper limits set forth above, micro-pinholes at the surface of a formed vinyl chloride resin molded product can be sufficiently reduced.

The total content of the (b1) trimellitic acid ester and the (b2) polyester in the vinyl chloride resin composition for powder molding is preferably 30 parts by mass or more, more preferably 45 parts by mass or more, even more preferably 65 parts by mass or more, further preferably 80 parts by mass or more, and even further preferably 90 parts by mass or more relative to 100 parts by mass of the (a) vinyl chloride resin, and is preferably 200 parts by mass or less, more preferably 155 parts by mass or less, even more preferably 140 parts by mass or less, and further preferably 125 parts by mass or less relative to 100 parts by mass of the (a) vinyl chloride resin. When the total content of the (b1) trimellitic acid ester and the (b2) polyester in the vinyl chloride resin composition for powder molding is within any of the specific ranges set forth above, tensile characteristics (particularly tensile elongation) of a formed vinyl chloride resin molded product can be further enhanced. Moreover, when the total content of the (b1) trimellitic acid ester and the (b2) polyester in the vinyl chloride resin composition for powder molding is not more than any of the upper limits set forth above, micro-pinholes at the surface of a formed vinyl chloride resin molded product can be sufficiently reduced.

A mass ratio of the (b1) trimellitic acid ester and the (b2) polyester (trimellitic acid ester/polyester) in the vinyl chloride resin composition for powder molding is preferably 1/9 or more, more preferably 1/4 or more, and even more preferably 1/3 or more, and is preferably 9/1, more preferably 2/1 or less, even more preferably 1/1 or less and further preferably 2/3 or less. When the mass ratio of the (b1) trimellitic acid ester and the (b2) polyester (trimellitic acid ester/polyester) in the vinyl chloride resin composition for powder molding is within any of the specific ranges set forth above, tensile characteristics (particularly tensile elongation) of a formed vinyl chloride resin molded product can be further enhanced.

### «(b3) Other plasticizers»

The (b) plasticizer contained in the vinyl chloride resin composition for powder molding may optionally include plasticizers (also referred to as "(b3) other plasticizers") other than the (b1) trimellitic acid ester and the (b2) polyester described above.

Specific examples of the (b3) other plasticizers include primary plasticizers other than the (b1) trimellitic acid ester and the (b2) polyester described above, secondary plasticizers, and the like among plasticizers that are described in WO2016/098344A1.

Of these plasticizers, epoxidized vegetable oil is preferable from a viewpoint of further enhancing tensile characteristics (particularly tensile elongation) of a formed vinyl chloride resin molded product, and epoxidized soybean oil is more preferable.

The proportional content of the (b3) other plasticizers in the (b) plasticizer is not specifically limited but is preferably not less than 0 mass% and not more than 5 mass%. When the proportional content of the (b3) other plasticizers in the (b) plasticizer is within the range set forth above, tensile characteristics (particularly tensile elongation) of a formed vinyl chloride resin molded product can be further enhanced.

The content of the (b3) other plasticizers in the vinyl chloride resin composition for powder molding is not specifically limited and can be set as not less than 0 parts by mass and not more than 5 parts by mass relative to 100 parts by mass of the (a) vinyl chloride resin.

The total content of the (b1) trimellitic acid ester, the (b2) polyester, and the (b3) other plasticizers (i.e., the content of the (b) plasticizer) in the vinyl chloride resin composition for powder molding is preferably 30 parts by mass or more, more preferably 45 parts by mass or more, even more preferably 65 parts by mass or more, further preferably 80 parts by mass or more, and even further preferably 90 parts by mass or more relative to 100 parts by mass of the (a) vinyl chloride resin, and is preferably 200 parts by mass or less, more preferably 155 parts by mass or less, even more preferably 140 parts by mass or less, and further preferably 125 parts by mass or less relative to 100 parts by mass of the (a) vinyl chloride resin. When the content of the (b) plasticizer in the vinyl chloride resin composition for powder molding is within any of the specific ranges set forth above, tensile characteristics (particularly tensile elongation) of a formed vinyl chloride resin molded product can be further enhanced. Moreover, when the content of the (b) plasticizer in the vinyl chloride resin composition for powder molding is not more than any of the upper limits set forth above, micro-pinholes at the surface of a formed vinyl chloride resin molded product can be sufficiently reduced.

### <Acrylic polymer>

The (c) acrylic polymer normally functions as a mold release agent in the vinyl chloride resin composition for powder molding. Through inclusion of the (c) acrylic polymer in the presently disclosed vinyl chloride resin composition for powder molding, it is possible to reduce micro-pinholes at the surface of a formed vinyl chloride resin molded product.

The term "acrylic polymer" as used in the present specification refers to a polymer that includes a structural unit derived from a (meth)acrylic acid alkyl ester. Also note that in the present specification, "(meth)acrylic acid" is used to indicate "acrylic acid" and/or "methacrylic acid".

A polymer that only includes a structural unit derived from a (meth)acrylic acid alkyl ester (i.e., a homopolymer of a (meth)acrylic acid alkyl ester) may be used as the acrylic polymer, or a polymer that includes a structural unit derived from a (meth)acrylic acid alkyl ester and a structural unit derived from a compound (other compound) other than a (meth)acrylic acid alkyl ester (i.e., a copolymer of a (meth)acrylic acid alkyl ester and another compound) may be used as the acrylic polymer.

Moreover, the acrylic polymer can be produced by polymerizing a (meth)acrylic acid alkyl ester, with another compound as necessary, according to a standard method.

Examples of (meth)acrylic acid alkyl esters that can be used to produce the acrylic polymer include, but are not specifically limited to, butyl (meth)acrylate, pentyl (meth)acrylate, hexyl (meth)acrylate, heptyl (meth)acrylate, octyl (meth)acrylate, nonyl (meth)acrylate, and decyl (meth)acrylate. Of these examples, octyl (meth)acrylate is preferably used as a (meth)acrylic acid alkyl ester, 2-ethylhexyl (meth)acrylate is more preferably used as a (meth)acrylic acid alkyl ester, and 2-ethylhexyl acrylate is particularly preferably used as a (meth)acrylic acid alkyl ester.

Note that no specific limitations are placed on other compounds that can be used in a case in which a copolymer of a (meth)acrylic acid alkyl ester and another compound is produced as the acrylic polymer so long as they are compounds other than vinyl chloride that are copolymerizable with the (meth)acrylic acid alkyl ester.

The proportional content of (meth)acrylic acid alkyl ester-derived structural units in the acrylic polymer is not specifically limited but is preferably 50 mass% or more, more preferably 70 mass% or more, even more preferably 90 mass% or more, and particularly preferably 100 mass%. In other words, it is particularly preferable that the acrylic polymer is a homopolymer of a (meth)acrylic acid alkyl ester.

The weight-average molecular weight of the acrylic polymer is required to be 1,000 or more, and is preferably 1,500 or more, more preferably 2,000 or more, even more preferably 2,500 or more, and particularly preferably 5,000 or more. Moreover, the weight-average molecular weight of the acrylic polymer is required to be 50,000 or less, and is preferably 30,000 or less, more preferably 20,000 or less, even more preferably 10,000 or less, and particularly preferably 6,000 or less. When the weight-average molecular weight of the acrylic polymer is within any of the specific ranges set forth above, micro-pinholes at the surface of a formed vinyl chloride resin molded product can be reduced.

The content of the (c) acrylic polymer in the vinyl chloride resin composition for powder molding is preferably 0.05 parts by mass or more, more preferably 0.1 parts by mass or more, and even more preferably 0.15 parts by mass or more relative to 100 parts by mass of the (a) vinyl chloride resin, and is preferably 10 parts by mass or less, more preferably 5 parts by mass or less, even more preferably 1 part by mass or less, and particularly preferably 0.4 parts by mass or less relative to 100 parts by mass of the (a) vinyl chloride resin. When the content of the (c) acrylic polymer in the vinyl chloride resin composition for powder molding is within any of the specific ranges set forth above, micro-pinholes at the surface of a formed vinyl chloride resin molded product can be further reduced.

### <Additives>

The presently disclosed vinyl chloride resin composition for powder molding may further contain various additives besides the components described above. Examples of additives that may be used include, but are not specifically limited to, components other than the previously described (b) trimellitic acid ester and (c) polyester including specific structural units that can also function as plasticizers (i.e., other plasticizers); lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition for powder molding, and suitable amounts thereof can also be the same as described in WO2016/098344A1.

Note that from a viewpoint of further reducing micro-pinholes at the surface of a formed vinyl chloride resin molded product, it is preferable that the presently disclosed vinyl chloride resin composition for powder molding does not contain a foaming agent.

Specific examples of foaming agents include organic foaming agents such as azo compounds (azodicarbonamide, azobisisobutyronitrile, etc.), nitroso compounds (N,N'-dinitrosopentamethylenetetramine, etc.), and sulfonyl hydrazide compounds (p-toluenesulfonyl hydrazide, p,p-oxybis(benzenesulfonyl hydrazide), etc.); and gaseous foaming agents such as chlorofluorocarbon gas, carbon dioxide gas, water, volatile hydrocarbon compounds such as pentane, and microcapsules encapsulating any of the preceding examples.

Moreover, the presently disclosed vinyl chloride resin composition for powder molding preferably contains 12-hydroxystearic acid. By using the previously described (c) acrylic polymer and 12-hydroxystearic acid together, it is possible to further reduce micro-pinholes at the surface of a formed vinyl chloride resin molded product.

The content of 12-hydroxystearic acid in the vinyl chloride resin composition for powder molding is preferably 0.05 parts by mass or more, more preferably 0.1 parts by mass or more, and even more preferably 0.15 parts by mass or more relative to 100 parts by mass of the (a) vinyl chloride resin, and is preferably 10 parts by mass or less, more preferably 5 parts by mass or less, even more preferably 1 part by mass or less, and particularly preferably 0.4 parts by mass or less relative to 100 parts by mass of the (a) vinyl chloride resin. When the content of 12-hydroxystearic acid in the vinyl chloride resin composition for powder molding is within any of the specific ranges set forth above, micro-pinholes at the surface of a formed vinyl chloride resin molded product can be even further reduced.

The presently disclosed vinyl chloride resin composition for powder molding may further contain silicone oil.

Note that the silicone oil that can be contained in the vinyl chloride resin composition for powder molding may be silicone oil such as described in JP2018-35304A, for example.

The content of the silicone oil in the vinyl chloride resin composition for powder molding is not specifically limited but is preferably 0.1 parts by mass or more, and more preferably 0.2 parts by mass or more relative to 100 parts by mass of the (a) vinyl chloride resin, and is preferably 1 part by mass or less, and more preferably 0.8 parts by mass or less relative to 100 parts by mass of the (a) vinyl chloride resin.

### <Production method of vinyl chloride resin composition for powder molding>

The presently disclosed vinyl chloride resin composition for powder molding can be produced by mixing the components described above.

Although no specific limitations are placed on the mixing method of the (a) vinyl chloride resin, (b) plasticizer, (c) acrylic polymer, and various additives that are further compounded as necessary, a method in which components other than a dusting agent (inclusive of vinyl chloride resin fine particles) are mixed by dry blending and then the dusting agent is subsequently added and mixed therewith, for example, may be adopted. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition for powder molding>

The obtained vinyl chloride resin composition for powder molding can be used in powder molding, and can more suitably be used in powder slush molding.

### (Vinyl chloride resin molded product)

A feature of the presently disclosed vinyl chloride resin molded product is that it is obtained by powder molding the vinyl chloride resin composition for powder molding set forth above by any powder molding method. As a result of the presently disclosed vinyl chloride resin molded product being formed using the vinyl chloride resin composition for powder molding set forth above, the presently disclosed vinyl chloride resin molded product normally contains at least the previously described (a) vinyl chloride resin, (b) plasticizer, and (c) acrylic polymer and has few micro-pinholes.

Therefore, the presently disclosed vinyl chloride resin molded product can suitably be used in production of a surface skin of an automobile interior component, such as an automobile instrument panel or door trim, having few micro-pinholes and excellent external appearance.

Note that the term "micro-pinholes" as used in the present disclosure refers to depressions having an equivalent circular diameter (area equivalent circular diameter) of not less than 100 µm and not more than 200 µm among depressions that are observed at the surface of a vinyl chloride resin molded product.

The number of micro-pinholes observed in a region having dimensions of 2 cm in height by 2 cm in width at the surface of the presently disclosed vinyl chloride resin molded product is preferably 150 or less, more preferably 120 or less, and even more preferably 100 or less. When the number of micro-pinholes at the surface of the vinyl chloride resin molded product is not more than any of the specific values set forth above, external appearance of the vinyl chloride resin molded product can be further improved. Moreover, the number of micro-pinholes observed in a region having dimensions of 2 cm in height by 2 cm in width at the surface of the presently disclosed vinyl chloride resin molded product is normally 10 or more, but is not specifically limited thereto.

Note that the number of micro-pinholes at the surface of a vinyl chloride resin molded product can be measured by a method described in the EXAMPLES section of the present specification.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition for powder molding is sprinkled onto a mold having a temperature within any of the ranges set forth above. The vinyl chloride resin composition is initially left for not less than 5 seconds and not more than 30 seconds and, after shaking off any excess vinyl chloride resin composition for powder molding, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

The presently disclosed laminate has excellent external appearance as a result of including a vinyl chloride resin molded product that is formed using the presently disclosed vinyl chloride resin composition for powder molding and that has few pinholes, for example. Therefore, the presently disclosed laminate can suitably be used as an automobile interior material forming an automobile interior component such as an automobile instrument panel or a door trim, for example.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

The following methods were used to measure and evaluate tensile elongation and pinholes of a vinyl chloride resin molded product.

### <Tensile elongation>

An obtained vinyl chloride resin molded sheet was punched out by a No. 1 Dumbbell described in JIS K6251, and then tensile breaking elongation (%) was measured in accordance with JIS K7113 under temperature conditions of normal temperature (23°C) and low temperature (-10°C) with a tensing rate of 200 mm/min. Note that a larger value for tensile breaking elongation indicates that the vinyl chloride resin molded sheet has better tensile elongation.

### <Micro-pinholes>

The number of micro-pinholes at the surface of an obtained vinyl chloride resin molded sheet was measured as follows.

Specifically, using a digital microscope (produced by Keyence Corporation; product name: VHX-6000), viewing fields at a magnification of ×50 were linked so as to set a region having dimensions of 2 cm in height by 2 cm in width as a measurement subject range. Among depressions observed in the measurement subject range, those having an equivalent circular diameter (area equivalent circular diameter) of not less than 100 µm and not more than 200 µm were counted as micro-pinholes, and the total number thereof was determined. A smaller number of micro-pinholes indicates that the vinyl chloride resin molded sheet has a smoother and more uniform surface and has better external appearance.

### (Production examples)

A polyester and an acrylic polymer used in the examples and comparative examples were produced as follows.

### <Polyester A>

Adipic acid as a polybasic carboxylic acid, 3-methyl-1,5-pentanediol as a polyhydric alcohol, and 2-ethylhexanol as a stopper (terminal stopping component) were charged to a reactor, tetraisopropyl titanate was added as a catalyst, solvent was added as appropriate, and heating thereof was performed under stirring. Water produced as a by-product was removed at normal pressure and at reduced pressure, and the temperature was finally raised to 220°C to 230°C to complete a dehydration condensation reaction. This yielded a polyester A (viscosity: 3,600 mPa.s; number-average molecular weight: 5,300; acid value: 0.32; hydroxyl value: 14.5) including 2-ethylhexoxy groups at the terminals thereof.

### <Acrylic polymer (homopolymer of 2-ethylhexyl acrylate)>

A homopolymer (weight-average molecular weight: 5,227) of 2-ethylhexyl acrylate was obtained as an acrylic polymer by polymerizing 2-ethylhexyl acrylate according to a standard method.

### (Example 1)

### <Production of vinyl chloride resin composition for powder molding>

With the exception of plasticizers (trimellitic acid ester, polyester A, and epoxidized soybean oil) and vinyl chloride resin fine particles used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as the dusting agent were added to the mixture to produce a vinyl chloride resin composition for powder molding.

### <Formation of vinyl chloride resin molded product>

A vinyl chloride resin molded sheet having dimensions of 145 mm × 175 mm × 1 mm was produced as described below.

Specifically, the vinyl chloride resin composition for powder molding obtained as described above was sprinkled onto a textured mold that was heated to a temperature of 250°C, and, after being left to melt for an arbitrary time, excess vinyl chloride resin composition for powder molding was shaken off. Thereafter, the textured mold onto which the vinyl chloride resin composition for powder molding had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet was removed from the mold as a vinyl chloride resin molded product.

Tensile elongation and micro-pinholes were measured and evaluated for the obtained vinyl chloride resin molded sheet (dimensions: 145 mm × 175 mm × 1 mm) according to the previously described methods. The results are shown in Table 1.

### (Example 2)

A polyester A, a vinyl chloride resin composition for powder molding, and a vinyl chloride resin molded product were produced in the same way as in Example 1 with the exception that the used amount of the acrylic polymer was changed as indicated in Table 1. Measurements and evaluations were made in the same manner as in Example 1. The results are shown in Table 1.

### (Example 3)

A polyester A, a vinyl chloride resin composition for powder molding, and a vinyl chloride resin molded product were produced in the same way as in Example 1 with the exception that 12-hydroxystearic acid was additionally used in an amount indicated in Table 1. Measurements and evaluations were made in the same manner as in Example 1. The results are shown in Table 1.

### (Example 4)

A polyester A, a vinyl chloride resin composition for powder molding, and a vinyl chloride resin molded product were produced in the same way as in Example 2 with the exception that a trimellitic acid ester was not used as a plasticizer, and the used amount of the polyester A was increased as indicated in Table 1. Measurements and evaluations were made in the same manner as in Example 1. The results are shown in Table 1.

### (Example 5)

A polyester A, a vinyl chloride resin composition for powder molding, and a vinyl chloride resin molded product were produced in the same way as in Example 2 with the exception that the type of vinyl chloride resin particles was changed, and the used amounts of the vinyl chloride resin fine particles as a dusting agent and the trimellitic acid ester and polyester A as plasticizers were reduced as indicated in Table 1. Measurements and evaluations were made in the same manner as in Example 1. The results are shown in Table 1.

### (Comparative Example 1)

A polyester A, a vinyl chloride resin composition for powder molding, and a vinyl chloride resin molded product were produced in the same way as in Example 3 with the exception that an acrylic polymer was not used. Measurements and evaluations were made in the same manner as in Example 1. The results are shown in Table 1.

### (Comparative Example 2)

A polyester A, a vinyl chloride resin composition for powder molding, and a vinyl chloride resin molded product were produced in the same way as in Example 1 with the exception that an acrylic polymer was not used. Measurements and evaluations were made in the same manner as in Example 1. The results are shown in Table 1.

**[Table 1]**

| | | | | Comparative Example 1 | Comparative Example 2 | Example 1 | Example 2 | Example 3 | Example 4 | Example 5 |
|---|---|---|---|---|---|---|---|---|---|---|
| Formulation | Vinyl chloride resin | Vinyl chloride resin particles A⁽¹⁾ [parts by mass] | | 100 | 100 | 100 | 100 | 100 | 100 | - |
| | | Vinyl chloride resin particles B⁽²⁾ [parts by mass] | | - | - | - | - | - | - | 100 |
| | | Vinyl chloride resin fine particles A (dusting agent)⁽³⁾ [parts by mass] | | 16 | 16 | 16 | 16 | 16 | 16 | 13 |
| | Plasticizer | Trimellitic acid ester⁽⁴⁾ [parts by mass] | | 30 | 30 | 30 | 30 | 30 | - | 20 |
| | | Polyester A [parts by mass] | | 80 | 80 | 80 | 80 | 80 | 110 | 70 |
| | | Epoxidized soybean oil⁽⁵⁾ [parts by mass] | | 5 | 5 | 5 | 5 | 5 | 5 | 5 |
| | Stabilizer | Perchloric acid-treated hydrotalcite⁽⁶⁾ [parts by mass] | | 4.5 | 4.5 | 4.5 | 4.5 | 4.5 | 4.5 | 4.5 |
| | | Zeolite⁽⁷⁾ [parts by mass] | | 2.4 | 2.4 | 2.4 | 2.4 | 2.4 | 2.4 | 2.4 |
| | | Stearoybenzoylmethane (β-diketone)⁽⁸⁾ [parts by mass] | | 1 | 1 | 1 | 1 | 1 | 1 | 1 |
| | | Zinc stearate⁽⁹⁾ [parts by mass] | | 0.2 | 0.2 | 0.2 | 0.2 | 0.2 | 0.2 | 0.2 |
| | Mold release agent | 12-Hydroxystearic acid⁽¹⁰⁾ [parts by mass] | | 0.2 | - | - | - | 0.2 | - | - |
| | Acrylic polymer | Homopolymer of 2-ethylhexyl acrylate [parts by mass] | | - | - | 0.2 | 0.4 | 0.2 | 0.4 | 0.4 |
| | Silicone oil | Unmodified silicone oil⁽¹¹⁾ [parts by mass] | | 0.4 | 0.4 | 0.4 | 0.4 | 0.4 | 0.4 | 0.4 |
| | Pigment | Black⁽¹²⁾ [parts by mass] | | 1.1 | 1.1 | 1.1 | 1.1 | 1.1 | 1.1 | 1.1 |
| Content relative to 100 parts by mass of vinyl chloride resin | | Trimellitic acid ester [parts by mass] | | 25.9 | 25.9 | 25.9 | 25.9 | 25.9 | - | 17.7 |
| | | Polyester A [parts by mass] | | 69.0 | 69.0 | 69.0 | 69.0 | 69.0 | 94.8 | 61.9 |
| | | Total content of trimellitic acid ester + polyester A [parts by mass] | | 94.8 | 94.8 | 94.8 | 94.8 | 94.8 | 94.8 | 79.6 |
| | | Total content of plasticizer [parts by mass] | | 99.1 | 99.1 | 99.1 | 99.1 | 99.1 | 99.1 | 84.1 |
| | | Acrylic polymer [parts by mass] | | - | - | 0.17 | 0.34 | 0.17 | 0.34 | 0.35 |
| Evaluation | Tensile breaking elongation [%] | | 23°C | 367 | 383 | 360 | 353 | 341 | 359 | 254 |
| | | | -10°C | 243 | 252 | 223 | 242 | 228 | 208 | 122 |
| | Number of micro-pinholes [holes] | | | 205 | 178 | 89 | 77 | 54 | 50 | 32 |

(1) Product name: ZEST^{®} (ZEST is a registered trademark in Japan, other countries, or both) 1700ZI (produced by suspension polymerization; average degree of polymerization: 1,700; average particle diameter: 129 µm); produced by Shin Dai-ichi Vinyl Corporation
(2) Product name: ZEST^{®} 1300SI (produced by suspension polymerization; average degree of polymerization: 1,300; average particle diameter: 132 µm); produced by Shin Dai-ichi Vinyl Corporation
(3) Product name: ZEST PQLTX (produced by emulsion polymerization; average degree of polymerization: 800; average particle diameter: 1.8 µm); produced by Shin Dai-ichi Vinyl Corporation
(4) Product name: TRIMEX N-08; produced by Kao Corporation
(5) Product name: ADK CIZER O-130S; produced by Adeka Corporation
(6) Product name: ALCAMIZER^{®} (ALCAMIZER is a registered trademark in Japan, other countries, or both) 5; produced by Kyowa Chemical Industry Co., Ltd.
(7) Product name: MIZUKALIZER DS; produced by Mizusawa Industrial Chemicals, Ltd.
(8) Product name: Karenz DK-1; produced by Showa Denko K.K.
(9) Product name: SAKAI SZ2000; produced by Sakai Chemical Industry Co., Ltd.
(10) Product name: ADK STAB LS-12; produced by Adeka Corporation
(11) Product name: KF-96H-300,000cs (unmodified silicone oil (polydimethylsiloxane); viscosity: 30 × 10⁴ cs); produced by Shin-Etsu Silicone
(12) Product name: DA PX 1720(A) Black; produced by Dainichiseika Color and Chemicals Mfg. Co., Ltd.

It can be seen from Table 1 that a vinyl chloride resin molded product having few micro-pinholes is obtained through the vinyl chloride resin compositions for powder molding of Examples 1 to 5, which each contain a vinyl chloride resin, a specific plasticizer, and an acrylic polymer having a weight-average molecular weight within a specific range.

It can also be seen from Table 1 that numerous micro-pinholes are present at the surface of a formed vinyl chloride resin molded product when using the vinyl chloride resin compositions for powder molding of Comparative Examples 1 and 2, which each do not contain an acrylic polymer having a weight-average molecular weight within a specific range.

### INDUSTRIAL APPLICABILITY

According to the present disclosure, it is possible to provide a vinyl chloride resin composition for powder molding that is capable of forming a vinyl chloride resin molded product have few micro-pinholes.

Moreover, according to the present disclosure, it is possible to provide a vinyl chloride resin molded product having few micro-pinholes.

Furthermore, according to the present disclosure, it is possible to provide a laminate including this vinyl chloride resin molded product.

## Claims

1. A vinyl chloride resin composition for powder molding comprising:
a vinyl chloride resin;
a plasticizer including either or both of a trimellitic acid ester and a polyester; and
an acrylic polymer having a weight-average molecular weight of not less than 1,000 and not more than 50,000.

2. The vinyl chloride resin composition for powder molding according to claim 1, wherein content of the acrylic polymer is not less than 0.05 parts by mass and not more than 10 parts by mass relative to 100 parts by mass of the vinyl chloride resin.

3. The vinyl chloride resin composition for powder molding according to claim 1, wherein total content of the trimellitic acid ester and the polyester is not less than 30 parts by mass and not more than 200 parts by mass relative to 100 parts by mass of the vinyl chloride resin.

4. The vinyl chloride resin composition for powder molding according to claim 1, wherein the acrylic polymer includes a structural unit derived from 2-ethylhexyl acrylate.

5. The vinyl chloride resin composition for powder molding according to claim 1 used in powder slush molding.

6. A vinyl chloride resin molded product obtained through powder molding of the vinyl chloride resin composition for powder molding according to any one of claims 1 to 5.

7. The vinyl chloride resin molded product according to claim 6 for a surface skin of an automobile interior component.

8. A laminate comprising: a foamed polyurethane molded product; and the vinyl chloride resin molded product according to claim 6.
